# EUROPEAN PATENT APPLICATION

(11) **EP 1 518 483 A1**
(43) Date of publication of application: **30.03.2005**
(21) Application number: 04255798.3
(22) Date of filing: 23.09.2004
(51) Int. Cl.: A47J 27/212

(54) **Illumination in liquid heating vessels**

(30) Priority: 25.09.2003 GB 0322497
(71) Applicant: STRIX LIMITED, Ronaldsway, Isle of Man IM9 2RG (GB)
(72) Inventor: Scott, Michael James, Isle of Man IM9 5PH (GB)
(74) Representative: Samuels, Adrian James

(57) **Abstract**

A liquid heating vessel comprises a body 2 and at least one light source 16,18 arranged in a transparent housing 14 defined in the body. The housing 14 protrudes in use into the liquid in the vessel thereby allowing direct transmission of light from the light source into the liquid.

## Description

This inventions relates to illumination of the liquid in liquid heating vessels, particularly but not exclusively, vessels for boiling water.

There have over the years been many proposals for illuminating the liquid in liquid heating vessels such as jug kettles and the like. One example of such an arrangement is shown in WO 02/32277 in which a light emitting diode (LED) is arranged in the upper part of a jug kettle and directed at the surface of the water therein. Although this may allow the water level to be seen, it is not effective in illuminating the body of the water as a result of reflection from the surface.

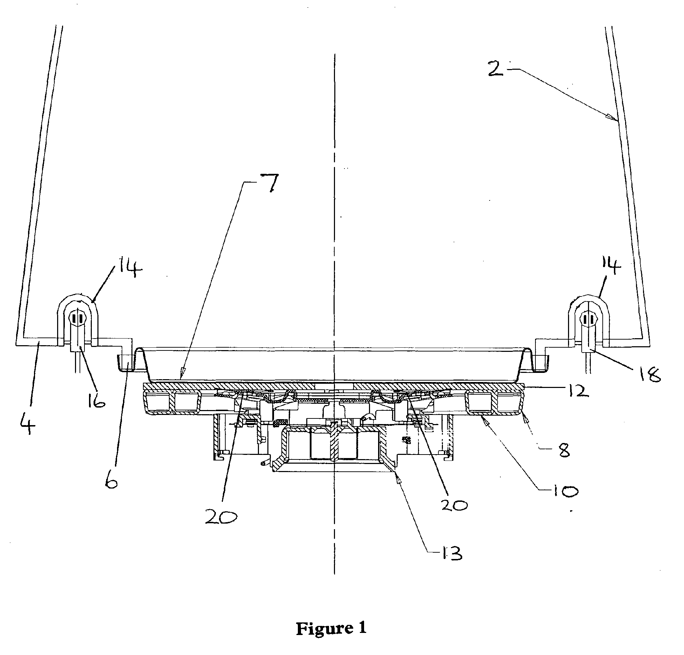

Another proposal is disclosed in the Applicant's WO 00/24300 with particular reference to Figure 3 thereof. In this arrangement a series of neon bulbs 74 is provided on a mounting ring in the base of the kettle to shine through the transparent base flange and into the water. However, it has been found that such an arrangement is relatively inefficient in terms of transmission of light into the water. The bulbs must therefore be relatively bright which makes them expensive.

The present invention seeks to provide an improvement on existing arrangements and when viewed from a first aspect there is provided a liquid heating vessel comprising a body and at least one light source arranged in a transparent housing defined in said body said housing protruding in use into the liquid in the vessel thereby allowing direct transmission of light from said light source into said liquid.

Thus it will be seen by those skilled in the art that in accordance with the present invention there is provided a liquid heating vessel which allows illumination of the liquid to be maximised by having the light source directly in the liquid itself. Since a minimal or no air gap is required between the light source and the housing, loss of light from scattering and absorption may be minimised. This means that a less bright light source may be used to achieve a given brightness in the liquid.

The light source may be of any suitable type, e.g. an LED or ordinary incandescent bulb but preferably a neon is used. Neons are particularly preferred in the present context since they are relatively inexpensive; especially the dimmer versions thereof which may be used in accordance with the present invention, and may be operated directly on a mains AC supply. Neons also emit the majority of their light in a radial direction and thus by orienting them in the housing in a generally vertical direction, substantially all of the light emitted will pass into the water without being lost.

In some embodiments the transparent housing protrudes from the side of the vessel. This may be beneficial in avoiding interference with a heated base. Alternatively the housing protrudes from the base. This ensures its effectiveness even with relatively small volumes of liquid and facilitates electrical connection e.g. via a control unit nowadays conventionally provided in the base of a liquid heating vessel. Most preferably in such embodiments, the housing protrudes from a region of the base radially outwardly of an electrically heated portion of the base such as a plate heater.

Just one light source may be provided, but preferably there are at least two. In one particularly preferred embodiment, one light source is arranged to be illuminated during heating of liquid in the vessel whilst the other is arranged to illuminated whilst liquid in the vessel is being kept warm by a lower power heater. Most preferably the two lights are different colours to allow the two modes of heating to be easily distinguished by a user.

The vessel body as a whole may be transparent or partially transparent. For example, only part of the body such as a window could be transparent or the whole or part of the body may be translucent without being fully transparent. It will be appreciated that the body could be made from glass, plastics, metal or any combination of these; plastics being preferred. The housing for the light source may be integrally moulded. However, preferably a separate housing is attached to an aperture in a non-transparent portion of the body. Thus in a particular preferred embodiment a generally opaque plastics body is provided with a transparent light source housing in the base thereof and a transparent window in a side wall thereof.

A preferred embodiment of the present invention will now be described, by way of example only, with reference to the accompanying Figure which shows a cross section through the lower part of a liquid heating vessel in accordance with the invention.

The Figure shows the lower part of the vessel body 2 which is moulded from polypropylene with a transparent window in the side (not shown). The body has an inwardly directed annular flange 4 at its base from the inward rim of which is a downwardly depending portion 6. A base plate 7 for an underfloor heater is clamped onto the downwardly depending wall portion 6 using the Applicant's well known Sure Seal system which is described in greater detail in WO 96/18331.

The heater comprises dual sheathed heating elements 8,10 which are adjacent one another on the heat diffusion plate 12. The radially outermost element 8 has a nominal power of 2000 Watts which is sufficient to heat water in the vessel to boiling. The inner element 10 has a power of 200 Watts which is sufficient to maintain water in the vessel at a temperature just below boiling point. Also attached to the diffusion plate 12 is a slightly modified version of the Applicant's well-known U10 integrated control unit 13.

Returning to the base flange 4, it will be seen that at diametrically opposite locations thereon are provided two domed transparent light housings 14. Although these may be moulded integrally with the base flange 4, in the embodiment shown they are formed separately and retained in suitable apertures in the flange 4, e.g. with adhesive. Within each light housing 14 is a mains neon bulb 16,18 respectively. The leftmost neon 16 is connected in parallel with the keep-warm heating element 10 whilst the rightmost neon 18 is connected electrically in parallel with the main heating element 8.

In use, the vessel is filled with water and switched on. During the initial heating phase, the control unit 13 supplies power to both the main heating element 8 and the keep-warm element 10 which thus heat the water in the vessel to boiling with a combined power of 2200 watts. At the same time, both neons 16,18 will be illuminated and will therefore transmit light through their respective housings 14 into the water. It will be appreciated that even though light is transmitted from the neons 16,18 in all directions, most of it will pass through the respective transparent housings 14 and into the water and therefore very little is lost. This allows relatively dim and therefore relatively inexpensive neons to be used whilst achieving the same effect as was possible only with more expensive brighter neons in previously known arrangements. The illuminated water may be viewed through the transparent window in the body 2 of the vessel.

Once the water in the vessel reaches boiling, a steam switch (not shown) operates to interrupt power to the main heating element 8 to leave only the keep-warm heating element 10 energised. This maintains the water at a temperature just below boiling. Correspondingly, the rightmost neon 18 is extinguished so that only the leftmost neon 16 is illuminated. By making the two neons 16,18 different colours, it will be immediately apparent to a user when the water in the vessel has boiled and is being kept warm. Even if they are the same colour, illumination of the water will be brighter during boiling.

## Claims

1. A liquid heating vessel comprising a body and at least one light source arranged in a transparent housing defined in said body said housing protruding in use into the liquid in the vessel thereby allowing direct transmission of light from said light source into said liquid.

2. A vessel as claimed in claim 1 wherein said light source comprises a neon

3. A vessel as claimed in claim 1 or 2 wherein said housing protrudes from the base of the vessel.

4. A vessel as claimed in claim 3 wherein said housing protrudes from a region of the base radially outwardly of an electrically heated portion of the base.

5. A vessel as claimed in claim 1 or 2 wherein said housing protrudes from a side wall of the vessel.

6. A vessel as claimed in any preceding claim comprising two or more light sources.

7. A vessel as claimed in claim 6 wherein one light source is arranged to be illuminated during heating of liquid in the vessel whilst the other is arranged to illuminated whilst liquid in the vessel is being kept warm by a lower power heater.

8. A vessel as claimed claim 6 or 7 wherein the two light sources are different colours.

9. A vessel as claimed in any preceding claim the housing is attached to an aperture in a non-transparent portion of the body.
